# EUROPEAN PATENT APPLICATION

(11) **EP 2 210 655 A1**
(43) Date of publication of application: **28.07.2010**
(21) Application number: 07831588.4
(22) Date of filing: 05.11.2007
(51) Int. Cl.: B01D 19/00, B01F 9/10

(54) **CHURNING DEAERATOR**

(71) Applicant: Thinky Corporation, Chiyoda-ku Tokyo 101-0032 (JP)
(72) Inventor: ISHII, Hiroshige, Tokyo 174-0064 (JP)
(74) Representative: Manitz, Gerhart
(86) International application number: PCT/JP2007/071857
(87) International publication number: WO 2009/060550

(57) **Abstract**

A mixing and degassing apparatus includes: a supporting member 14; a rotating base 16 supported on the supporting member so as to be rotatable on a first rotational axis Y1; a first rotating mechanism 18 for rotating the rotating base on the first rotational axis; a container 20 which is fixed to a peripheral portion of the rotating base and which is rotatable with the rotating base around the first rotational axis; a shearing stress applying member 40 having a shearing stress applying portion 40a which is arranged in the vicinity of a maximum centrifugal force applying region on the inner wall surface of the container and which is rotatable on a second rotational axis Y2; and a second rotating mechanism 46 for rotating the shearing stress applying portion of the shearing stress applying member on the second rotational axis to apply a shearing stress to a material to be treated in the container, wherein if the rotating base rotates on its own axis to revolve the container, the shearing stress applying portion rotates on its own axis while moving along the trajectory of revolution of the container, so that a shearing stress is applied to the material in the container to mix and degas the material.

## Description

### Technical Field

The present invention relates generally to a mixing and degassing apparatus. More specifically, the invention relates to a mixing and degassing apparatus for mixing a material to be treated while releasing bubbles from the material (while degassing the material).

### Background Art

As a conventional mixing and degassing apparatus, there is known a mixing and degassing apparatus for mixing and degassing a material to be treated by rotating a container holder, which holds a container for containing therein a material to be treated, on its own axis while revolving the container holder so as to move along the trajectory of revolution thereof (see, e.g., Japanese Patent Laid-Open No. 10-43568). In this mixing and degassing apparatus, the container holder is rotatably supported on the peripheral portion of a rotator. The rotator is designed to be rotated for revolving the container holder around the rotation axis thereof while the container holder is rotated on its own axis. In such a mixing and degassing apparatus, the material to be treated in the container is pressed against the inner wall of the container by centrifugal force caused by the revolution of the container holder, so that bubbles in the material are released to the outside (the material is degassed). In addition, the rotation of the container holder on its own axis causes the difference (shear rate) between the traveling velocity of molecules of the material in the vicinity of the inner wall of the container and the traveling velocity thereof at a distance from there, so that shearing force is applied to the material. Then, the fluidized state of the material is continuously maintained while the material emits heat, so that the entire material is mixed. Furthermore, the function of degassing the material is more excellent as the revolving velocity of the container hold is higher, and the function of mixing the material is more excellent as the rotating velocity of the container is higher.

However, if a mixing and degassing apparatus has members (a container and a rotating shaft) rotating on their own axes while moving along the trajectory of revolution thereof as conventional mixing and degassing apparatuses, the rotating members are greatly influenced by acceleration, so that the rotating mechanism thereof is not easily designed. In addition, if such an influence of acceleration is considered, it is not possible to increase the weight and volume of the container, so that there is a limit to the amount of the material capable of being treated at a time. Moreover, if such an influence of acceleration is considered, there is a limit to the increase of the rotational speed of the container, so that it is desired to provide a mixing and degassing apparatus capable of further increasing the number of revolution of the container.

### Disclosure of the Invention

It is therefore an object of the present invention to eliminate the aforementioned conventional problems and to provide a mixing and degassing apparatus capable of mixing and degassing a material to be treated even if a container revolving around a rotational axis does not rotate on its own axis, of increasing the amount of the material which can be treated at a time, and of increasing the number of revolution of the revolving container.

According to the present invention, a mixing and degassing apparatus comprises: a supporting member; a rotating base which is supported on the supporting member so as to be rotatable on a first rotation axis; a first rotating mechanism for rotating the rotating base on the first rotation axis; a container which is fixed to a peripheral portion of the rotating base and which is rotatable with the rotating base around the first rotation axis; and a shearing stress applying means for applying a shearing stress to a material to be treated in the container, wherein the material is mixed and degassed by applying the shearing stress to the material in the container by the shearing stress applying means while rotating the rotating base on the first rotation axis by the first rotating mechanism.

In this mixing and degassing apparatus, the container containing therein the material is mounted on the peripheral portion of the rotating base. When the rotating base is rotated by the first rotating mechanism, the container rotates (revolves) around the rotation axis of the rotating base to apply centrifugal force to the material therein to degas the material. In addition, the shearing stress applying means applies a shearing stress to the material to mix the material. In conventional mixing and degassing apparatuses, the inner wall of the container rotating on its own axis applies a shearing stress to a material to be treated. On the other hand, in the mixing and degassing apparatus according to the present invention, the shearing stress applying means applies a shearing stress to the material, so that the material can be mixed in such a state that the container is fixed to the rotating base, i.e., without rotating the container on its own axis.

In the above-described mixing and degassing apparatus, the shearing stress applying means preferably comprises: a shearing stress applying member having a shearing stress applying portion, arranged in the vicinity of the inner wall of the container, for applying the shearing stress to the material in the container; and a driving mechanism for driving the shearing stress applying member.

In this mixing and degassing apparatus, the shearing stress applying member (such as a mixing member) is driven by the driving mechanism (such as a mixing member driving means) when the container revolves around the rotation axis of the rotating base. Thus, the shearing stress applying portion of the shearing stress applying member can contact the material in the container to rub the material thereon to apply the shearing stress to the material in the container to mix the material. Furthermore, as an example of the driving mechanism for driving the shearing stress applying member, there may be used a mechanism for rotating, oscillating or vibrating the shearing stress applying member in the container (a mechanism for relatively rotating or displacing the shearing stress applying member with respect to the container).

In the above-described mixing and degassing apparatus, the shearing stress applying portion is preferably arranged in the vicinity of a region (a maximum centrifugal force applying region), which is farthest from the first rotation axis, on the inner wall of the container.

In this mixing and degassing apparatus, the material can be mixed by applying the shearing stress to the material by means of the shearing stress applying portion even if the material in the container is adhered to the inner wall of the container by centrifugal force. That is, since the container revolves around the rotation axis of the rotating base in accordance with the rotation of the rotating base, centrifugal force is applied to the material, which is contained in the container, in such a direction that the material falls away from the rotation axis of the rotating base, so that the material is intended to be collected in the region (the maximum centrifugal force applying region), which is farthest from the axis of revolution (the rotation axis of the rotating base), on the inner wall of the container. However, since the shearing stress applying portion is arranged in the vicinity of the maximum centrifugal force applying region on the inner wall of the container, it is possible to prevent the material collected in the maximum centrifugal force applying region from remaining therein, so that it is possible to fluidize the material in the container.

It is possible to apply a great shearing stress to the material existing between the shearing stress applying portion and the maximum centrifugal force applying region by arranging the shearing stress applying portion in the vicinity of the maximum centrifugal force applying region, so that it is possible to precisely treat the material. That is, the traveling velocity of the material existing between the shearing stress applying portion and the maximum centrifugal force applying region is higher as the material is located nearer to the shearing stress applying portion. In addition, the variation in velocity (velocity gradient) of the material between the shearing stress applying portion and the inner wall surface of the container is greater as the distance between the shearing stress applying portion and the inner wall surface of the container is smaller. Therefore, if the shearing stress applying portion is arranged in the vicinity of the inner wall surface of the container, it is possible to cause a great velocity gradient to the material existing between the shearing stress applying portion and the inner wall surface of the container to mix the material, and it is possible to apply stress (shearing stress, shearing force) to the material. In addition, if stress is applied to the material, it is possible to precisely mix the material, and it is possible to decrease the size of particles contained in the material. Moreover, if the shearing stress applying portion is arranged in the vicinity of the maximum centrifugal force applying region, it is possible to surely cause the shearing stress applying portion to contact the material even if the amount of the material is small, and it is possible to increase the contact area of the shearing stress applying portion, so that it is possible to precisely mix the material.

In the above-described mixing and degassing apparatus, the shearing stress applying portion of the shearing stress applying member is preferably rotatable on a second rotation axis, which is different from the first rotation axis, in the container. In addition, the driving mechanism for driving the shearing stress applying member is preferably a second rotating mechanism for rotating the shearing stress applying portion of the shearing stress applying member on the second rotation axis. Moreover, the shearing stress applying portion of the shearing stress applying member preferably rotates on the second rotation axis while the container rotates around the first rotation axis so as to move along the trajectory of revolution thereof.

In this mixing and degassing apparatus, the shearing stress applying portion of the shearing stress applying member is rotated by the second rotating mechanism, so that it is possible to rub the material on the shearing stress applying portion to apply a shearing stress to the material to mix the material.

In the above-described mixing and degassing apparatus, the shearing stress applying portion of the shearing stress applying member preferably rotates on the second rotation axis if the rotating base rotates on the first rotation axis.

In this mixing and degassing apparatus, when the rotating base is rotated on the first rotation axis by the first rotating mechanism, the shearing stress applying portion of the shearing stress applying member is rotated on the second rotation axis by the rotation of the rotating base, so that it is possible to apply a shearing stress to the material in the container to mix the material.

In the above-described mixing and degassing apparatus, the shearing stress applying means may have a plurality of shearing stress applying members, each of which has a shearing stress applying portion, arranged in the vicinity of the inner wall of the container, for applying a shearing stress to the material in the container. In this case, the shearing stress applying portions of a pair of shearing stress applying members of the plurality of shearing stress applying members are preferably arranged in the vicinity of a region (a maximum centrifugal force applying region), which is farthest from the first rotation axis, on an inner wall of the container. In addition, the shearing stress applying portion of each of the plurality of shearing stress applying members is preferably rotatable on a second rotation axis, which is different from the first rotation axis, in the container, and the shearing stress applying portion of each of the plurality of shearing stress applying members preferably rotates on the second rotation axis while the container rotates around the first rotation axis.

In this mixing and degassing apparatus, it is possible to precisely mix the material since it is possible to increase the region in which the shearing stress is applied by the plurality of shearing stress applying portions.

Furthermore, throughout the specification, the "shearing stress" means internal friction generated in a fluid in accordance with the flow of a viscous fluid.

### Brief Description of the Drawings

FIG. 1 is an illustration for explaining the first preferred embodiment of a mixing and degassing apparatus according to the present invention;
FIG. 2 is a perspective view showing a portion rotating (revolving) with a rotating base of the mixing and degassing apparatus in the first preferred embodiment;
FIG. 3 is an illustration for explaining a portion rotating (revolving) with the a rotating base of the mixing and degassing apparatus in the first preferred embodiment;
FIGS. 4A through 4E are illustrations for explaining the operation of the mixing and degassing apparatus in the first preferred embodiment;
FIG. 5 is an illustration for explaining the first modified example of the mixing and degassing apparatus in the first preferred embodiment;
FIG. 6 is an illustration for explaining a modified portion of the second modified example of the mixing and degassing apparatus in the first preferred embodiment;
FIG. 7 is an illustration for explaining a modified portion of the third modified example of the mixing and degassing apparatus in the first preferred embodiment;
FIG. 8 is an illustration for explaining a modified example of the fourth modified example of the mixing and degassing apparatus in the first preferred embodiment;
FIG. 9 is an illustration for explaining a modified example of the fifth modified example of the mixing and degassing apparatus in the first preferred embodiment;
FIGS. 10A and 10B are illustrations for explaining the second preferred embodiment of a mixing and degassing apparatus according to the present invention;
FIG. 11 is an illustration for explaining the directions of rotation of shearing stress applying portions of the mixing and degassing apparatus in the second preferred embodiment;
FIG. 12 is an illustrate for explaining the directions of rotation of shearing stress applying portions in the first modified example of the mixing and degassing apparatus in the second preferred embodiment;
FIG. 13 is an illustration for explaining the directions of rotation of shearing stress applying portions in the second modified example of the mixing and degassing apparatus in the second preferred embodiment;
FIG. 14 is an illustration for explaining a modified portion of the third modified example of the mixing and degassing apparatus in the second preferred embodiment; and
FIG. 15 is an illustration for explaining the third preferred embodiment of a mixing and degassing apparatus according to the present invention.

Best Mode for Carrying Out the Invention Referring to the accompanying drawings, the preferred embodiments of a mixing and degassing apparatus according to the present invention will be described below in detail.

### [First Preferred Embodiment]

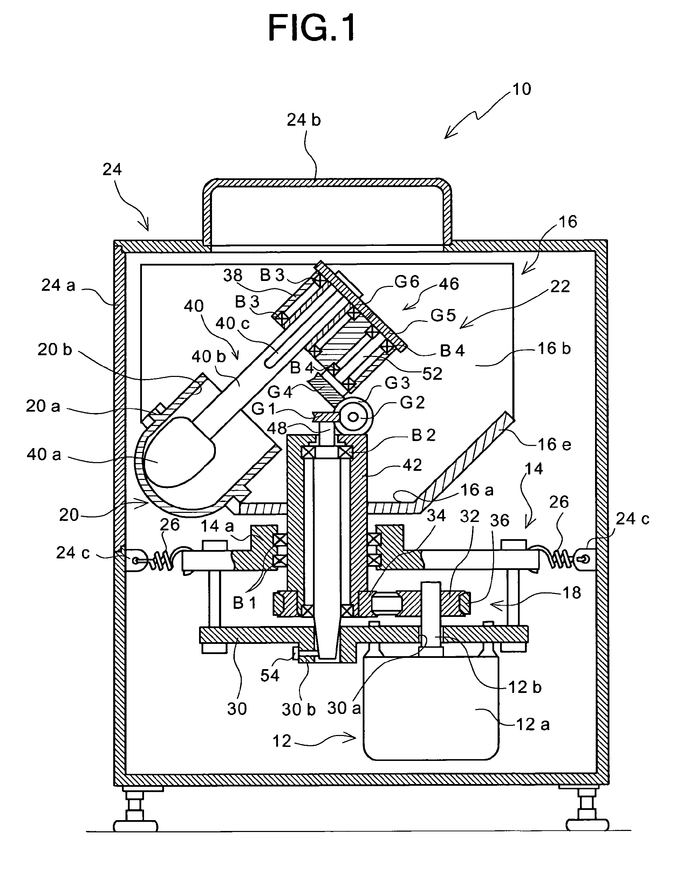

FIGS. 1 through 3 show the first preferred embodiment of a mixing and degassing apparatus according to the present invention. The mixing and degassing apparatus in this preferred embodiment is an apparatus for mixing a material to be treated while releasing bubbles from the material to the outside (while degassing the material). As materials to be treated by the apparatus, there are various materials, such as soldering pastes, impression materials for dental, greases, resins, pigments, various powders, and composite materials (epoxy resins, phenol resins), e.g., carbon composites used for bodies of airplanes and vehicles.

As shown in FIGS. 1 through 3, the mixing and degassing apparatus 10 in this preferred embodiment comprises: a supporting member 14 on which a motor 12 is mounted; a rotating base 16 which is rotatably supported on the supporting member 14; a first rotating mechanism 18 for rotating the rotating base 16 by means of the motor 12; a container 20 which is fixed on the peripheral portion of the rotating base 16 and which can rotate (revolve) with rotating base 16; and a shearing stress applying means 22 for applying a shearing stress to a material to be treated in the container 20 while the rotating base 16 rotates. These are housed in a housing 24 having a shape of a substantially rectangular parallelepiped.

On the side face of the housing 24, a door portion 24a capable of being open and closed is provided. By opening the door portion 24a, the container 20 can be mounted on and detached from the rotating base 16. On the upper portion of the housing 24, a detachable lid portion 24b is provided. By detaching the lid portion 24b from the housing 24, the position of the shearing stress applying means 22 can be adjusted.

The supporting member 14 is a substantially plate-shaped member. The supporting member 14 is mounted on mounting portions 24c, which are provided on the side face of the housing 24, by means of a plurality of vibration isolating springs 26 so as to extend in substantially horizontal directions. On the substantially central portion of the upside of the supporting member 14, there is formed a cylindrical base supporting portion 14a projecting upwards. On the underside of the supporting member 14, there is mounted a bracket 30 for fixing the motor 12 at a distance from the supporting member 14. In the base supporting portion 14a of the supporting member 14, the rotating base 16 is rotatably supported via bearings B1. The bracket 30 has a circular through hole 30a, and a cylindrical shaft supporting portion 30b which projects downwards.

The motor 12 is a driving source for the rotating base 16. The motor 12 comprises a motor body 12a which is fixed on the downside of the bracket 30, and a rotating shaft 12b which projects upwards from the motor body 12a to rotate. The rotating shaft 12b passes through the through hole 30a of the bracket 30 so that the tip portion thereof is located in a space between the supporting member 14 and the bracket 30.

The first rotating mechanism 18 comprises: a first pulley 32 which is connected directly to the rotating shaft 12b of the motor 12; a second pulley 34 which is connected directly to a rotating shaft 42 (which will be described later) fixed to the rotating base 16; and a belt 36 which is spanned between the first pulley 32 and the second pulley 34. The rotation of the rotating shaft 12b of the motor 12 is designed to be transmitted to the rotating base 16 via the first pulley 32, belt 36 and second pulley 34 to rotate the rotating base 16 at a desired number of rotation. Furthermore, the ratio of radius of the first pulley 32 to that of the second pulley 34 can be suitably changed in accordance with the number of rotation of the motor 12 and the desired number of rotation of the rotating base 16. For example, the ratio may be 1:2.

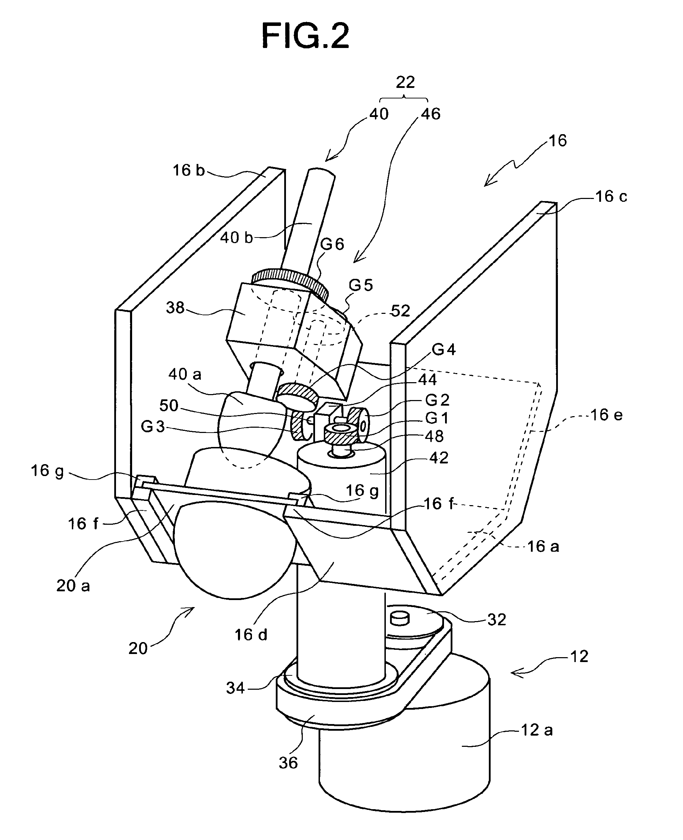

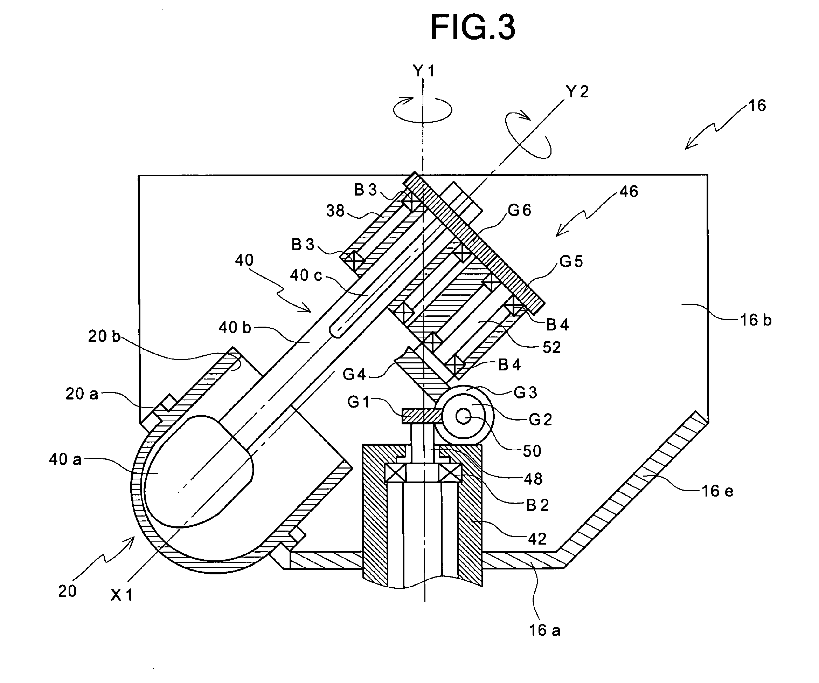

The rotating base 16 is rotatable on a rotation axis Y1 (see FIG. 3) extending in directions perpendicular to the supporting member 14. The rotating base 16 comprises a substantially rectangular bottom portion 16a which extends in substantially horizontal directions, and four side portions 16b, 16c, 16d and 16e which extend from the side faces of the bottom portion 16a (see FIG. 2). Among the four side portions, a pair of side portions 16b and 16c facing each other extend in directions substantially perpendicular to the bottom portion 16a. The other pair of side portions 16d and 16e extend in directions inclined with respect to the bottom portion 16a. Furthermore, the rotating base 16 may be formed of, e.g., a steel plate having a thickness of about 15 mm, in order to ensure the rigidity thereof.

The pair of facing side portions 16b and 16c have a hexagonal shape which is formed by cutting both of lower corner portions of a rectangular plate. Thus, the rotating base 16 is lightened by cutting both of the lower corner portions. The inner face of one side portion 16b of the pair of facing side portions 16b and 16c is provided with a second shaft supporting portion 38. Furthermore, the second shaft supporting portion 38 is arranged in the vicinity of the rotation axis Y1 of the rotating base 16 (see FIGS. 1 and 3).

Each of the other pair of side portions 16d and 16e has a rectangular shape. Each of the pair of side portions 16d and 16e is inclined outside so as to extend at an angle of about 135 degrees with respect to the bottom portion 16a and in directions perpendicular to a rotation axis Y2 (see FIG. 3) of a shearing stress applying member 40 of the shearing stress applying means 22. The side portion 16d, which is one of the pair of side portions 16d and 16e, has a rectangular opening on the side of the side portion 16b. To opening end portions 16f and 16f which face each other on both sides of the opening of the side portion 16d, there are fixed fixtures 16g and 16g having an L-shaped cross section, so that recessed portions are formed between the opening end portions 16f and the fixtures 16g, respectively. A rectangular flange 20a fixed to the periphery of the container 20, which has an open top portion, a substantially semi-spherical bottom portion and a cylindrical side portion, is slidable along the fixtures 16g and 16b to be fitted into the recessed portions, so that the container 20 can be mounted on and detached from the rotating base 16.

To the central portion of the bottom portion 16a of the rotating base 16, there is fixed the cylindrical rotating shaft 42 which passes through the bottom portion 16a and which extends in directions perpendicular to the bottom portion 16a. Thus, the rotating base 16 is designed to rotate on the rotating shaft 42 if the rotating shaft 42 rotates on its own axis. Furthermore, the rotating shaft 42 extends in directions substantially perpendicular to the supporting member 14. To the bottom end of the rotating shaft 42, the second pulley 34 of the first rotating mechanism 18 is fixed. Thus, the rotation of the rotating shaft 12b of the motor 12 is transmitted to the rotating shaft 42 via the first pulley 32, belt 36 and second pulley 34 to rotate the rotating base 16 on the rotation axis Y1.

To the top face of the bottom portion 16a of the rotating base 16, a first shaft supporting portion 44 having a shape of a substantially rectangular parallelepiped is fixed at a distance from the rotating shaft 42. Thus, the first shaft supporting portion 44 is designed to rotate (revolve) around the rotating shaft Y1 by the rotation of the rotating base 16.

The shearing stress applying means 22 comprises: the shearing stress applying member 40 for applying a shearing stress to the material to be treated in the container 20; and a second rotating mechanism 46 for rotating the shearing stress applying member 40.

The shearing stress applying member 40 is made of, e.g., a metal, a resin or the like. The shearing stress applying member 40 comprises: a shearing stress applying portion 40a arranged in the vicinity of a region (a maximum centrifugal force applying region), which is farthest from the rotation axis Y1 of the rotating base 16, on the inner wall 20b of the container 20; and a supporting shaft portion 40b for supporting the shearing stress applying portion 40a.

The shearing stress applying portion 40a is a member having a substantially cylindrical portion integrally formed with a substantially semi-spherical portion on the side of the tip portion thereof. The shearing stress applying portion 40a may be hollow to be lightened.

The supporting shaft portion 40b is inclined at an angle of 45 degrees with respect to horizontal directions (also at an angle of 45 degrees with respect to the rotation axis Y1 of the rotating base 16) so as to extend in parallel to the inner wall 20b of the side portion of the container 20 at a distance from a central axis X1 of the container 20. The supporting shaft portion 40b is rotatably supported on the second shaft supporting portion 38 of the rotating base 16 via a bearing B3. By thus arranging the supporting shaft portion 40b, the shearing stress applying portion 40a is arranged in the vicinity of the inner wall 20b of the container 20. In addition, a gear G6 is fixed to the supporting shaft portion 40b. The side face of the supporting shaft portion 40b has a key way 40c extending in longitudinal directions thereof. When a key (not shown) is fitted into the key way 40c, the supporting shaft portion 40b is connected to the gear G6 to be allowed to manually slide in longitudinal directions thereof while the rotation of the gear G6 is transmitted to the supporting shaft portion 40b.

The shearing stress applying means 22 comprises: a stationary shaft 48 which is inserted into the rotating shaft 42 of the rotating base 16; a first connecting shaft 50 which is rotatably supported on the first shaft supporting portion 44 of the rotating base 16 via a bearing (not shown); a second connecting shaft 52 which is rotatably supported on the second shaft supporting portion 38 of the rotating base 16 via a bearing B4; and gears G1 to G6 (see FIG. 2).

The stationary shaft 48 is supported on the rotating shaft 42viaabearingB2. The lower portion of the stationary shaft 48 is inserted into the shaft supporting portion 30b of the bracket 30 to be fixed to the bracket 30 by means of a pin 54. Thus, the stationary shaft 48 does not rotate even if the rotating base 16 rotate. To the upper portion of the stationary shaft 48, the gear G1 is fixed.

The first connecting shaft 50 is arranged so as to extend in directions perpendicular to the stationary shaft 48. To both end portions of the first connecting shaft 50, the gears G2 and G3 are fixed, respectively. The gear G2 is an orthogonal gear which meshes with the gear G1 at a shaft angle of 90 degrees and which is mounted on the side of the rotating base 16 via the first connecting shaft 50. When the rotating base 16 rotates, the gear G2 rotates as a planetary gear which moves on the fixed gear G1. The rotation of the gear G2 is transmitted to the gear G4 via the gear G3.

The second connecting shaft 52 is inclined at an angle of about 45 degrees with respect to horizontal directions. To both end portions of the second connecting shaft 52, the gears G4 and G5 are fixed, respectively. The gear G4 is an orthogonal gear which meshes with the gear G3 at a shaft angle of 45 degrees and which is rotated by the gear G3 to rotate the second connecting shaft 52 and the gear G5. The gear G5 is a spur gear which meshes with the gear G6 for transmitting the rotation of the gear G5 to the gear G6 to rotate the supporting shaft portion 40b and the shearing stress applying portion 40a. Thus, the second rotating mechanism 46 is designed to rotate the shearing stress applying member 40 on the rotation axis Y2 which is parallel to the central axis X1 of the container 20. Furthermore, the respective ratios of radius of the gears G1 to G6 can be suitably set in accordance with a desired number of revolution of the supporting shaft portion 40b and so forth.

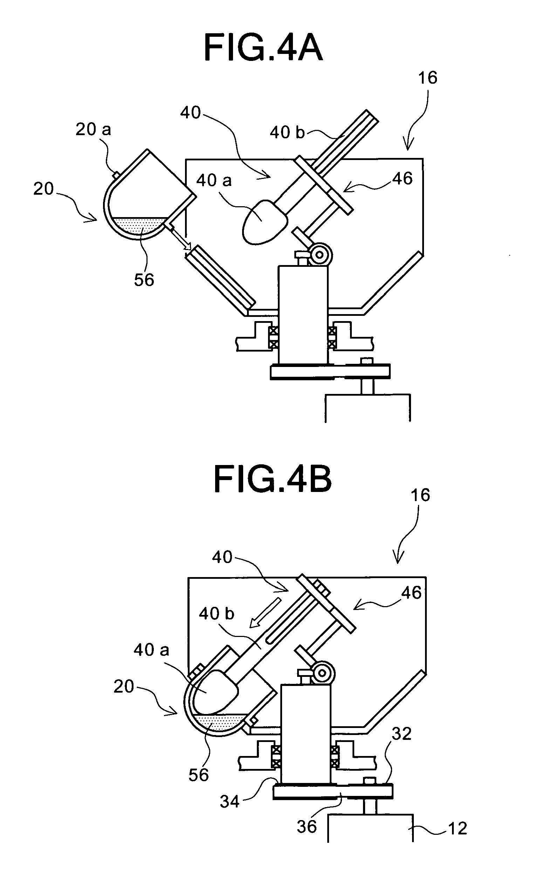

Referring to FIGS. 4A through 4E, the operation of the mixing and degassing apparatus thus constructed will be described below.

First, as shown in FIG. 4A, the container 20 containing therein a material 56 to be treated is mounted on the rotating base 16 as shown by the arrow in such a state that the supporting shaft portion 40b is slid to the uppermost position.

Then, as shown in FIG. 4B, the supporting shaft portion 40b is slid downwards as shown by the arrow to be connected to the gear G6 in such a state that the shearing stress applying portion 40a is located in the vicinity of the inner wall of the container 20.

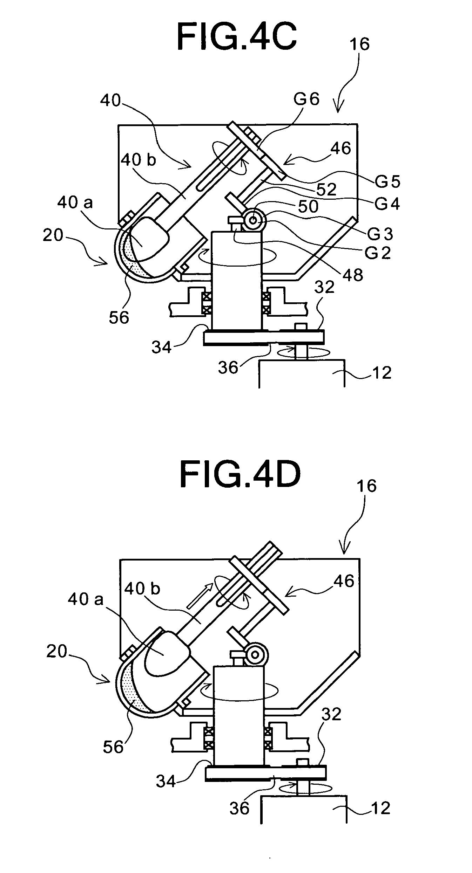

Then, as shown in FIG. 4C, the motor 12 is rotated, so that the rotation of the motor 12 is transmitted to the rotating base 16 via the first pulley 32, belt 36 and second pulley 34. Thus, the rotating base 16 rotates on the rotation axis Y1 (see FIG. 3), and the container 20 also rotates (revolves) around the rotation axis Y1. On the other hand, when the rotating base 16 rotates, the stationary shaft 48 relatively rotates with respect to the rotating base 16, so that the rotation of the stationary shaft 48 is transmitted to the supporting shaft 40b via the gear G1, gear G2, first connecting shaft 50, gear G3, gear G4, second connecting shaft 52, gear G5 and gear G6. Thus, the supporting shaft portion 40b and the shearing stress applying portion 40a rotate on the rotation axis Y2 (see FIG. 3).

At this time, the material 56 to be treated in the container 20 is degassed by centrifugal force caused by the rotation (revolution) of the container 20. In addition, a shearing stress is applied to the material 56 by the rotation of the shearing stress applying portion 40a, i.e., a shearing stress is applied to the material 56, which exists between the shearing stress applying portion 40a and the container 20, by utilizing the difference in velocity (relative velocity) between the shearing stress applying portion 40a and the container 20, so that the material 56 is mixed. In particular, since the shearing stress applying portion 40a is located in the vicinity of the maximum centrifugal force applying region on the inner wall 20b of the container 20, the shearing stress applying portion 40a can apply the shearing stress to the material 56 to effectively mix the material 56 even in such a state that the material 56 is adhered on the inner wall of the container 20 by centrifugal force. In addition, since the material 56 existing on the nearer side of the rotation axis Y1 to the shearing stress applying portion 40a is pressed against the shearing stress applying portion 40a by centrifugal force, the shearing stress applying portion 40a can apply the shearing stress to the material 56 to mix the material 56.

Then, as shown in FIG. 4D, the supporting shaft portion 40b is slid slightly upwards as shown by the arrow, and the shearing stress applying portion 40a is located in the vicinity of the upper portion of the inner wall 20b of the container 20. In this state, the motor 12 is rotated again, so that the rotating base 16 rotates on the rotation axis Y1. In addition, the supporting shaft portion 40b and the shearing stress applying portion 40a rotate on the rotation axis Y2. Thus, the material 56 adhered to the surface of the shearing stress applying portion 40a can be removed from the shearing stress applying portion 40a to be returned into the container 20 by centrifugal force.

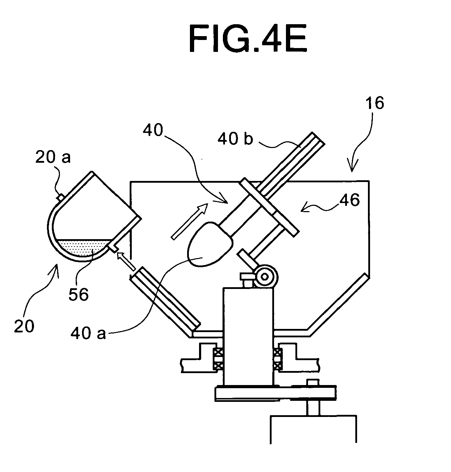

Thereafter, as shown in FIG. 4E, the supporting shaft portion 40b is lifted upwards as shown by the arrow, and the container 20 is detached from the rotating base 16 as shown by the arrow. Thus, the treatment is completed.

The mixing and degassing apparatus 10 in the above-described preferred embodiment can mix the material 56 in such a state that the container 20 is fixed to the rotating base 16 (i.e., without rotating the container 20 on its own axis), since the shearing stress is applied to the material 56 by the shearing stress applying means 22.

The mixing and degassing apparatus 10 in the above-described preferred embodiment can be easily designed, since the shearing stress applying means 22 is supported in the vicinity of the rotation axis Y1 of the rotating base 16 in which the influence of acceleration is small.

In the mixing and degassing apparatus 10 in the above-described preferred embodiment, since the container 20 is fixed to the rotating base 16, the volume and weight of the container 20 can be increased in comparison with those of conventional mixing and degassing apparatuses. For example, in the mixing and degassing apparatus 10 in the above-described preferred embodiment, the weight of the material capable of being treated in the container can be not less than 100 to 200 kg, so that a lot of material can be treated at a time.

In the mixing and degassing apparatus 10 in the above-described preferred embodiment, since the container 20 is fixed to the rotating base 16, the rotational speed of the rotating base 16 can be increased to be a rotational speed of not less than 10000 rpm even if the influence of acceleration is considered, so that it is possible to more effectively degas the material 56.

In the mixing and degassing apparatus 10 in the above-described preferred embodiment, the lightened shearing stress applying member 40 can be used in comparison with the total weight of a mechanism for housing therein a container which rotates on its own axis while moving along the trajectory of revolution thereof, a mechanism for rotating the container, and so forth in conventional mixing and degassing apparatus. In addition, since the second rotating mechanism 46 is located in the vicinity of the rotation axis Y1 of the rotating base 16, the influence of acceleration can be more greatly suppressed than that in conventional mixing and degassing apparatus wherein a container is rotated on its own axis while being moved along the trajectory of revolution thereof, so that the rotating mechanism can be easily designed.

In the mixing and degassing apparatus 10 in the above-described preferred embodiment, since the cross section of the shearing stress applying portion 40a (the cross section perpendicular to the rotation axis Y2) is substantially circular, the material 56 can be mixed so as not to entrap air therein, so that the degassing and mixing of the material 56 can be precisely carried out. In addition, since centrifugal force is applied to the material 56, the shearing stress can be applied to the material 56 to mix the material 56 even if the cross section of the shearing stress applying portion 40a is substantially circular.

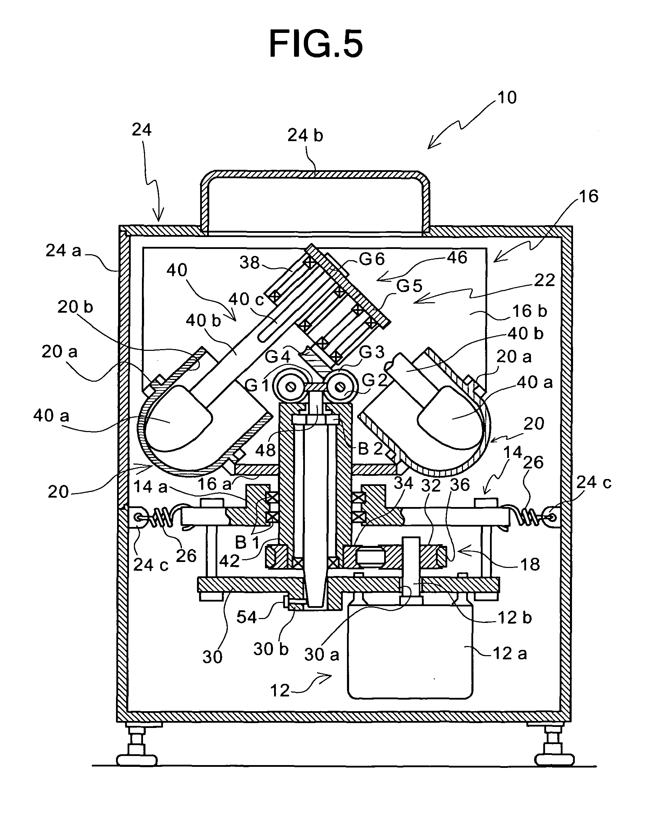

FIG. 5 shows a first modified example of a mixing and degassing apparatus 10 in the above-described preferred embodiment. In this modified example, two containers 20 and two shearing stress applying means 22 are provided so as to be symmetrical with respect to the rotation axis Y1 (revolution axis) of the rotating base 16, respectively. Other constructions are the same as those in the above-described preferred embodiment, so that repeated descriptions thereof are omitted.

In this modified example, the amount of a material to be treated at a time can be twice, and the rotating balance can be improved. Furthermore, three or more of containers 20 and three or more of shearing stress applying means 22 may be provided, respectively.

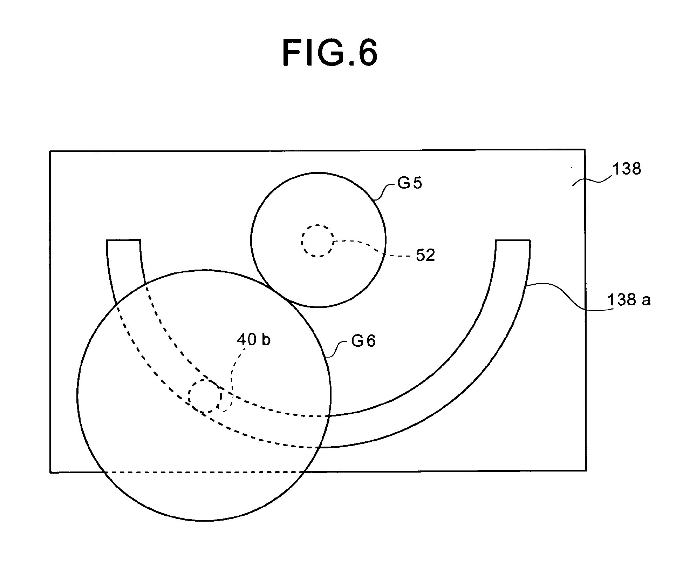

FIG. 6 schematically shows an enlarged modified portion of a second modified example of a mixing and degassing apparatus 10 in the above-described preferred embodiment. In this modified example, a second shaft supporting portion 138 is provided in place of the second shaft supporting portion 38. Other constructions are the same as those in the above-described preferred embodiment, so that repeated descriptions thereof are omitted.

In this modified example, there is formed a through hole 138a which passes through the second shaft supporting portion 138 having a substantially rectangular planar shape and which extends so as to have a circular-arc shape. The width of the through hole 138a is greater than the diameter of the supporting shaft portion 40b. The supporting shaft portion 40b (and a bearing which rotatably supports thereon the supporting shaft portion 40b) passes through the through hole 138a and is movable along the through hole 138a, so that the position of the supporting shaft portion 40b can be changed. In addition, the through hole 138a is formed so as to have the circular-arc shape around the gear G5 (around a second connecting shaft 52). Thus, the through hole 138a allows the transmission of power between the supporting shaft portion 40b and the second connecting shaft 52 while maintaining the constant distance between the supporting shaft portion 40b and the second connecting shaft 52. Furthermore, the second shaft supporting portion 138 may be provided with a fixing member for fixing the supporting shaft portion 40b at a desired position.

In this modified example, since the shearing stress applying portion 40a can be located at a desired position in the container 20, the position of the shearing stress applying portion 40a can be changed in accordance with the size and shape of the container 20 and/or the physical properties of the material to be treated, so that it is possible to precisely mix the material.

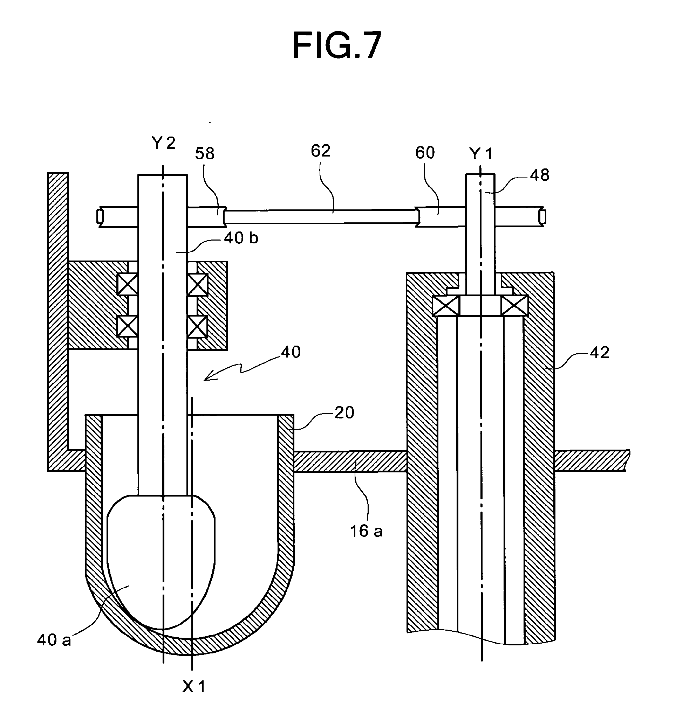

FIG. 7 shows an enlarged modified portion of the third modified example of a mixing and degassing apparatus 10 in the above-described preferred embodiment. In this modified example, the rotation axis Y2 of the supporting shaft portion 40b of the shearing stress applying member 40 is parallel to the central axis of the stationary shaft 48 (parallel to the rotation axis Y1 of the rotating base 16), so that the shearing stress applying member 40 can rotate on the rotation axis Y2 which extends in parallel to the rotation axis Y1 of the rotating base 16. Also in this modified example, the central axis X1 of the container 20 is perpendicular to the bottom portion 16a of the rotating base 16 (parallel to the rotation axis Y1 of the rotating base 16). In addition, a pulley 58 is fixed to the supporting shaft portion 40b, and a pulley 60 is fixed to the upper portion of the stationary shaft 48. Between the first pulley 58 and the second pulley 60, a belt 62 is spanned. Thus, a mechanism similar to a planetary gear mechanism is provided between the pulley 58, which is fixed to the supporting shaft portion 40b, and the pulley 60 which is fixed to the stationary shaft 48, so that the shearing stress applying member 40 can be rotated on its own axis if it is revolved around the stationary shaft 48. Other constructions are the same as those in the above-described preferred embodiment, so that repeated descriptions thereof are omitted.

In this modified example, since the supporting shaft portion 40b is arranged in parallel to the stationary shaft 48, it is possible to simplify the power transmission device for rotating the supporting shaft portion 40b, and it is possible to decrease the loss of transmission of torque for rotating the supporting shaft portion 40b.

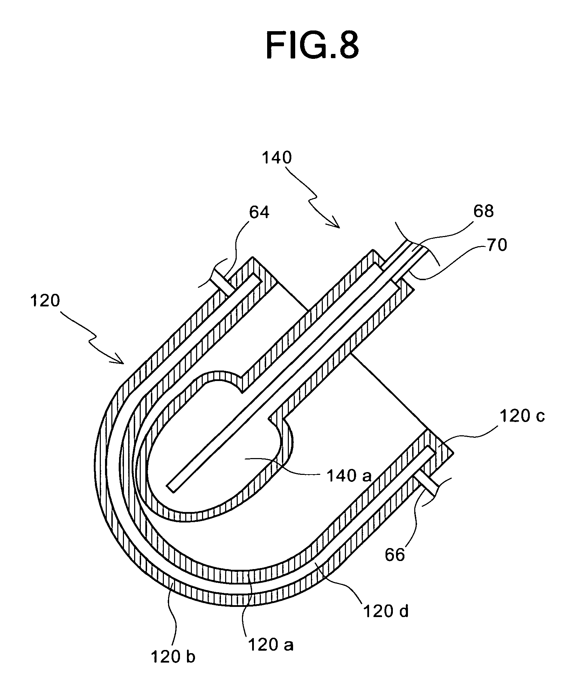

FIG. 8 shows an enlarged modified portion of the fourth modified example of a mixing and degassing apparatus 10 in the above-described preferred embodiment. In this modified example, a container 120 is used in place of the container 20, and a shearing stress applying member 140 is used in place of the shearing stress applying member 40. Other constructions are the same as those in the above-described preferred embodiment, so that repeated descriptions thereof are omitted.

The container 120 in this modified example comprises: an inner wall portion 120a; an outer wall portion 120b surrounding the inner wall portion 120a at a distance from the inner wall portion 120a; and a top end wall portion 120c which connects the top end of the outer wall portion 120b to that of the inner wall portion 120a to define an internal cavity 120d between the outer wall portion 120b and the inner wall portion 120a to form a double wall structure. The container 120 is provided with first and second pipes 64 and 66, each of which passes through the outer wall portion 120b to be communicated with the internal cavity 120d. The first pipe 64 is connected to a medium supply device (not shown), and the second pipe 66 is connected to a medium recovery device (not shown), so that the temperature of a material to be treated in the container 120 can be precisely controlled to be a desired temperature by filling and circulating a medium, such as a temperature controlling refrigerant or a heating medium, in the internal cavity 120d of the container 120. In particular, since the container 120 is not designed to rotate on its own axis, the structures for connecting the first and second pipes 64 and 66 to the medium supply device and medium recovery device can be simplified in comparison with a mixing and degassing apparatus wherein a container rotates on its own axis. In addition, if a temperature controlling device for heating or cooling a medium recovered via the second pip 66 is provided for controlling the temperature of the medium to a desired temperature to feed the temperature controlled medium from the medium supply device to the internal cavity 120d via the first pipe 64, the temperature of the material to be treated can be more precisely controlled.

The shearing stress applying member 140 is hollow for forming the internal cavity 140a therein. In addition, a medium supply pipe 68 and a medium recovery pipe 70 pass through the shearing stress applying member 140 to be communicated with the internal cavity 140a. Thus, the temperature of a material to be treated in the container 120 can be precisely controlled to be a desired temperature by filling and circulating a temperature controlling medium in the internal cavity 140a of the shearing stress applying member 140. Furthermore, the medium supply pipe 68 and the medium recovery pipe 70 are fitted into a through hole, which is formed in the substantially central portion of the top end face of the shearing stress applying member 140, to be coaxial with the rotation axis of the shearing stress applying member 140. Therefore, even if the shearing stress applying member 140 rotates on its own axis, the medium can be circulated via the medium supply pipe 60 and medium recovery pipe 70.

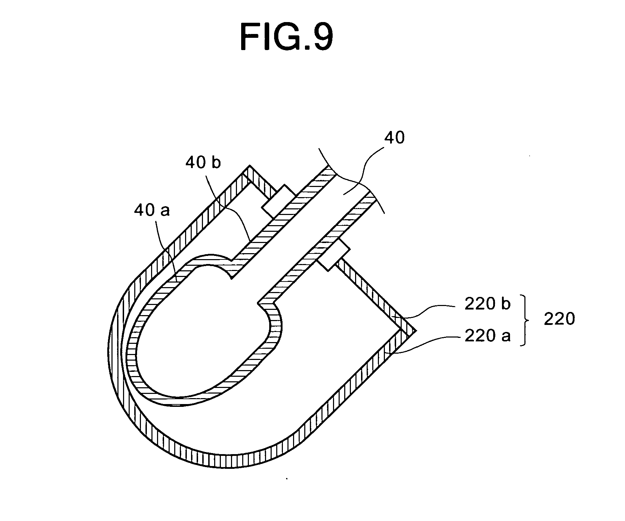

FIG. 9 schematically shows an enlarged modified portion of the fifth modified example of a mixing and degassing apparatus 10 in the above-described preferred embodiment. In this modified example, a container 220 having an airtight structure capable of air-tightly holding the interior thereof is used in place of the container 20. Other constructions are the same as those in the above-described preferred embodiment, so that repeated descriptions thereof are omitted.

In this modified example, the container 220 comprises: a container body 220a having a similar shape to that of the container 20; and a lid portion 220b for closing an opening of the container body 220a. The lid portion 220b has a through hole, through which the supporting shat portion 40b of the shearing stress applying member 40 passes, in order to arrange the shearing stress applying portion 40a of the shearing stress applying member 40 in the container body 220a. In addition, a pressure control device (not shown) for setting a desired pressure in the container 220, such as a vacuum pump for reducing the pressure in the container 220, is provided for controlling the pressure in the container 220 via a pipe (not shown) which establishes a communication between the pressure control device and the interior of the container 220. Thus, if the pressure in the container 220 can be set to be a desired pressure, it is possible to more precisely treat the material. In particular, if the pressure in the container 220 is reduced, it is possible to more effectively degas the material to be treated.

In the mixing and degassing apparatus 10 in the above-described preferred embodiment, the shearing stress applying member 40 of the shearing stress applying means 22 is rotated by the second rotating mechanism 46. However, a motor may be used in place of the second rotating mechanism 46 to rotate the shearing stress applying member 40. If such a motor is used, it is possible to apply a shearing stress to a material to be treated with a simple structure. In this case, if the motor is arranged on the rotation axis Y1 of the rotating base 16, it is possible to decrease centrifugal force applied to the motor.

In the mixing and degassing apparatus 10 in the above-described preferred embodiment, the shearing stress applying member 40 of the shearing stress applying means 22 is rotated by the second rotating mechanism 46. However, it is not always required to rotate the shearing stress applying member 40 if the shearing stress applying member 22 can apply a shearing stress to a material to be treated. For example, the shearing stress applying member 40 may be oscillated or vibrated to apply a shearing stress to a material to be treated.

In the above-described preferred embodiment, if the entire material to be treated can not sufficiently be fluidized due to the physical properties of the material by the rotational motion of the shearing stress applying means 22, the mixing and degassing apparatus 10 may be provided with a mechanism for oscillating or vibrating the shearing stress applying portion 40a of the shearing stress applying member 40, in addition to the second rotating mechanism 46 for rotating the shearing stress applying member 40 of the shearing stress applying means 22. For example, the mixing and degassing apparatus 10 may be provided with a mechanism for driving the supporting shaft portion 40b and shearing stress applying portion 40a of the shearing stress applying member 40 upwards in axial directions by a cam mechanism or the like after the rotational speed is adjusted at an appropriate ratio from the first connecting shaft 50 which connects the gear G2 to the gear G3. In this case, if the supporting shaft portion 40b and shearing stress applying portion 40a of the shearing stress applying member 40 are moved downwards in axial directions by the action of gravity and centrifugal force, the supporting shaft portion 40b and shearing stress applying portion 40a of the shearing stress applying member 40 can be smoothly vibrated in axial directions.

In the mixing and degassing apparatus 10 in the above-described preferred embodiment, the shape of the tip portion of the shearing stress applying portion 40a of the shearing stress applying member 40 is a substantially semi-spherical. However, it is not always required to be a substantially semi-spherical, and it may be other shape, such as a planer shape. The surface of the shearing stress applying portion 40a of the shearing stress applying member 40 may be formed with grooves or protrusions. If such grooves or protrusions are formed, a material to be treated can be more efficiently fluidized, so that the material can be more effectively mixed.

In the mixing and degassing apparatus 10 in the above-described preferred embodiment, it may be designed that the shearing stress applying portion 40a of the shearing stress applying member 40 can be replaced. Thus, if the shearing stress applying portion 40a can be replaced with a shearing stress applying portion having an appropriate shape in accordance with the kind, viscosity, physical properties and so forth of a material to be treated, it is possible to more effectively mix the material.

In the mixing and degassing apparatus 10 in the above-described preferred embodiment, the sliding motion of the supporting shaft portion 40b of the shearing stress applying member 40 is manually carried out. However, the sliding motion may be automatically carried out by providing the mixing and degassing apparatus 10 with an automatic positioning mechanism in axial directions.

In the mixing and degassing apparatus 10 in the above-described preferred embodiment, it may be designed that the position of the container 20 can be changed by allowing the flange 20a of the container 20 to be fixed at a desired position in the recessed portions which are formed between the opening end portions 16f and fixtures 16g of the side portion 16d of the rotating base 16, respectively. Thus, it is possible to adjust the distance between the inner wall 20b of the container 20 and the shearing stress applying portion 40a of the shearing stress applying member 40, so that it is possible to suitably mix the material to be treated.

In the mixing and degassing apparatus 10 in the above-described preferred embodiment, the rotation axis Y2 of the shearing stress applying member 40 is offset from the central axis X1 of the container 20. However, the rotation axis Y2 of the shearing stress applying member 40 may be coincident with the central axis X1 of the container 20.

### [Second Preferred Embodiment]

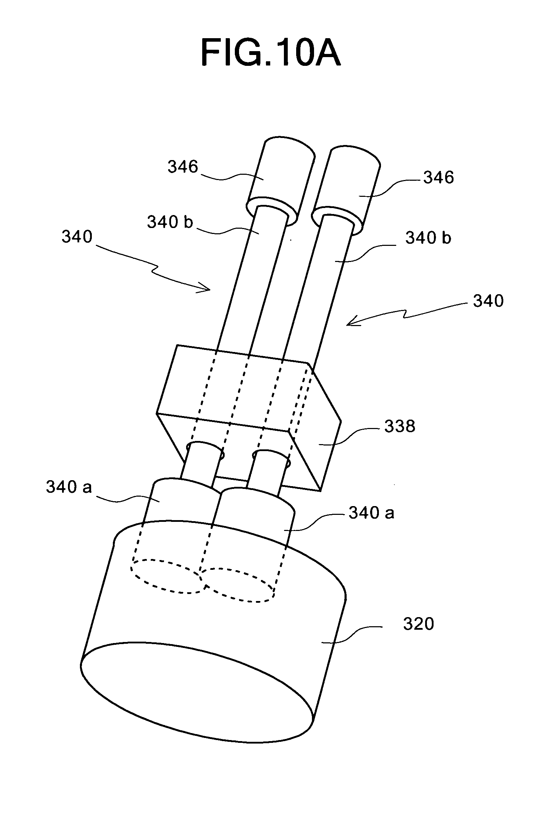

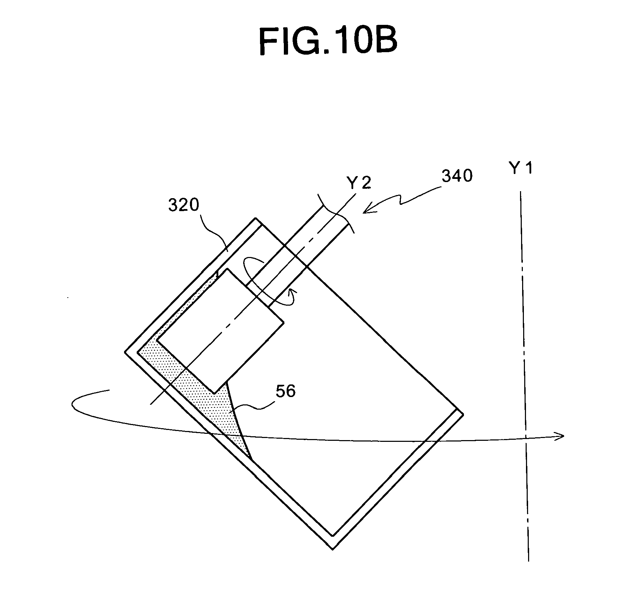

FIGS. 10A and 10B schematically show part of the second preferred embodiment of a mixing and degassing apparatus according to the present invention. In this preferred embodiment, a cylindrical container 320 having a bottom is used in place of the container 20, and a pair of shearing stress applying members (first and second shearing stress applying members) 340, 340 are used in place of the shearing stress applying member 40. In addition, a pair of motors 346, 346 are used in place of the second rotating mechanism 46, and a second shaft supporting portion 338 is used in place of the second shaft supporting portion 38 of the rotating base 16. Other constructions are the same as those in the above-described preferred embodiment, so that repeated descriptions thereof are omitted.

The container 320 is fixed to the peripheral portion of the rotating base 16 so that the central axis thereof (the central axis of the cylindrical container 320, which is an axis extending from the center of the bottom of the container 320 in directions perpendicular to the bottom thereof) is inclined with respect to the rotation axis Y1 of the rotating base 16. The container 320 is designed to rotate (revolve) around the rotation axis Y1 of the rotating base 16 in accordance with the rotation of the rotating base 16. Furthermore, the container 320 may be fixed to the peripheral portion of the rotating base 16 so that the central axis thereof is in parallel to the rotation axis Y1 of the rotating base 16.

Each of the first and second shearing stress applyingmembers340, 340comprises: a substantially cylindrical shearing stress applying portion 340a which is arranged in the vicinity of the inner wall of the container 320; and a substantially cylindrical supporting shaft portion 340b for supporting thereon the shearing stress applying portion 340a.

Each of the first and second shearing stress applying members 340, 340 is rotatably supported on a second shaft supporting portion 338 of the rotating base 16 via a bearing (not shown) so as to be capable of rotating (revolving) around the rotation axis Y1 of the rotating base 16 in accordance with the rotation of the rotating base 16. Furthermore, since the container 320 is fixed to the rotating base 16, it is possible to fix the relative positions between the container 320 and the shearing stress applying portions 340a, 340a of the first and second shearing stress applying members 340, 340, respectively.

Each of the first and second shearing stress applying members 340, 340 is designed to rotate on the rotation axis Y2 (perpendicular to the bottom of the container 320) by means of the first and second motors 346, 346, which are mounted on the top end portions thereof, respectively. Furthermore, the feeding to each of the first and second motors 346, 346 can be carried out by means of, e.g., a slip-ring (not shown) which is mounted on the rotating shaft 42 of the rotating base 16. The direction and angular acceleration of rotation of each of the first and second shearing stress applying members 340, 340 can be controlled by adjusting power supplied to the first and second motors 346, 346. If the first and second motors 346, 346 are arranged in the vicinity of the rotation axis Y1 of the rotating base 16, it is possible to reduce the influence of centrifugal force applied to the first and second motors 346, 346 by the rotation of the rotating base 16.

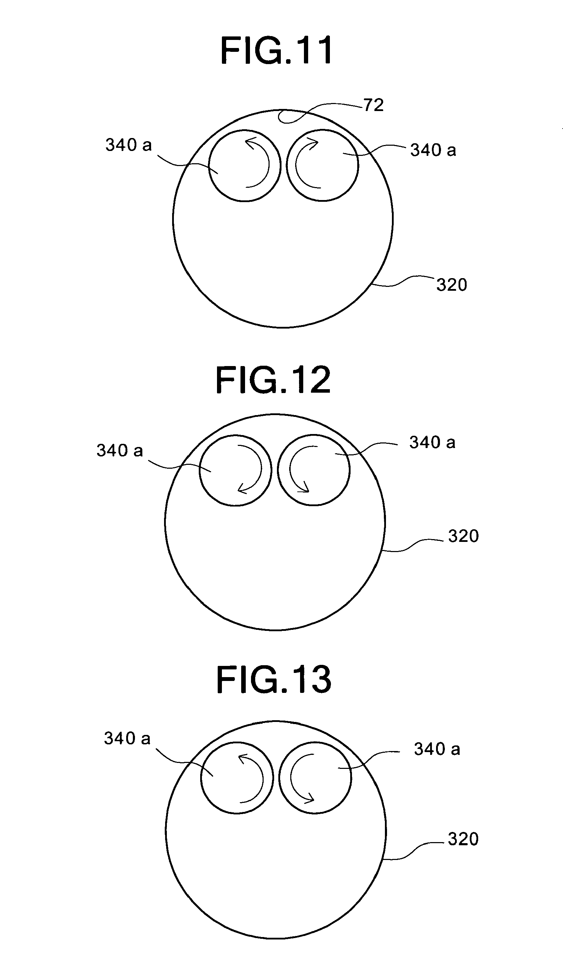

Each of the shearing stress applying portions 340a, 340a of the first and second shearing stress applyingmembers 340, 340 is arranged in the vicinity of a region (a maximum centrifugal force applying region) 72 (see FIG. 11) which is arranged on the inner wall of the container 320 and which is farthest from the rotation axis Y1 of the rotating base 16, so that it is possible to sufficiently contact the shearing stress applying portions 340a, 340a of the first and second shearing stress applying members 340, 340 with a material to be treated while the container 320 rotates (revolves) around the rotation axis Y1 of the rotating base 16.

The shearing stress applying portions 340a, 340a of the first and second shearing stress applying members 340, 340 are arranged in the vicinity of each other. Furthermore, the distance between the shearing stress applying portions 340a and 340a of the first and second shearing stress applying members 340, 340 may be equal to the distance between the container 320 and the shearing stress applying portion 340a of the first shearing stress applying member 340, and the distance between the container 320 and the shearing stress applying portion 340a of the second shearing stress applying member 340.

As shown in FIG. 11, the shearing stress applying portions 340a, 340a of the first and second shearing stress applying members 340, 340 are designed to rotate in opposite directions to each other and in such directions that the traveling direction of the periphery thereof is coincident with the direction of centrifugal force on such a side that the shearing stress applying portions 340a and 340a of the first and second shearing stress applying members 340, 340 face each other. Furthermore, the shearing stress applying portions 340a, 340a of the first and second shearing stress applying members 340, 340 may rotate at the same angular acceleration of rotation, or at different angular accelerations of rotation.

As a mechanism for rotating the shearing stress applying portions 340a, 340a of the first shearing stress applying members 340, 340, a torque transmission device containing a planetary gear mechanism may be used. That is, if rotating torque is applied to the first and second shearing stress applying members 340, 340 in accordance with the rotation (revolution) of the container 320 caused by the rotation of the rotating base 16 similar to the second rotating mechanism 46 of the mixing and degassing apparatus in the above-described first preferred embodiment, it is not required to provide an exclusive driving source for rotating the first and second shearing stress applying members 340, 340. Since the mixing and degassing apparatus in this preferred embodiment has the pair of shearing stress applying portions 340a, 340a, it is possible to apply a shearing stress in a wide region in the container 320. In particular, if the shearing stress applying portions 340a, 340a are arranged in the vicinity of the maximum centrifugal force applying region, it is possible to apply a shearing stress to a material to be treated in two regions in the vicinity of the maximum centrifugal force applying region on the inner wall of the container 320. In addition, it is possible to apply a shearing stress to a material to be treated between the shearing stress applying portions 340a and 340a of the first and second shearing stress applying members 340, 340, so that it is possible to efficiently mix the material. In particular, since centrifugal force is applied to the material between the shearing stress applying portions 340a and 340a of the first and second shearing stress applyingmembers 340, 340, it is possible to cause the material to pass through a space between the pair of shearing stress applying portions 340a and 340a, even if the shearing stress applying portions 340a and 340a of the first and second shearing stress applying members 340, 340 are arranged so as to be extremely close to each other. Therefore, it is possible to apply a great shearing stress to the material between the pair of shearing stress applying portions 340a and 340a, so that it is possible to precisely mix the material.

FIG. 12 shows a modified portion of the first modified example of a mixing and degassing apparatus in the second preferred embodiment. In this modified example, as shown in FIG. 12, a pair of shearing stress applying portions 340a and 340a are designed to rotate in opposite directions to each other and in such directions that the traveling direction of the periphery thereof is opposite to the direction of centrifugal force on such a side that the shearing stress applying portions 340a and 340a face each other. Other constructions are the same as those in the above-described preferred embodiment, so that repeated descriptions thereof are omitted.

In this modified example, a great shearing stress can be applied to a material to be treated between the pair of shearing stress applying portions 340a and 340a. That is, the material moves in the direction of centrifugal force in the substantially central region between the pair of shearing stress applying portions 340a and 340a, whereas the material moves along the shearing stress applying portions 340a and 340a in the opposite direction to centrifugal force in a region near the shearing stress applying portions 340a and 340a. Therefore, it is possible to increase the velocity gradient of the material between the pair of shearing stress applying portions 340a and 340a, so that it is possible to precisely mix the material.

FIG. 13 shows a modified portion of the second modified example of a mixing and degassing apparatus in the second preferred embodiment. In this modified example, as shown in FIG. 13, a pair of shearing stress applying portions 340a and 340a are designed to rotate in the same direction. Other constructions are the same as those in the above-described preferred embodiment, so that repeated descriptions thereof are omitted.

In this modified example, since the traveling directions of the facing surfaces of the pair of shearing stress applying portions 340a and 340a are opposite directions to each other, the difference in velocity of the material between the pair of shearing stress applying portions 340a and 340a can be increased to apply a great shearing stress to the material, so that it is possible to precisely mix the material. Furthermore, the material can pass through a space between the shearing stress applying portions 340a and 340a even if the traveling directions of the facing surfaces of the shearing stress applying portions 340a and 340a are opposite directions to each other, since centrifugal force is applied to the material.

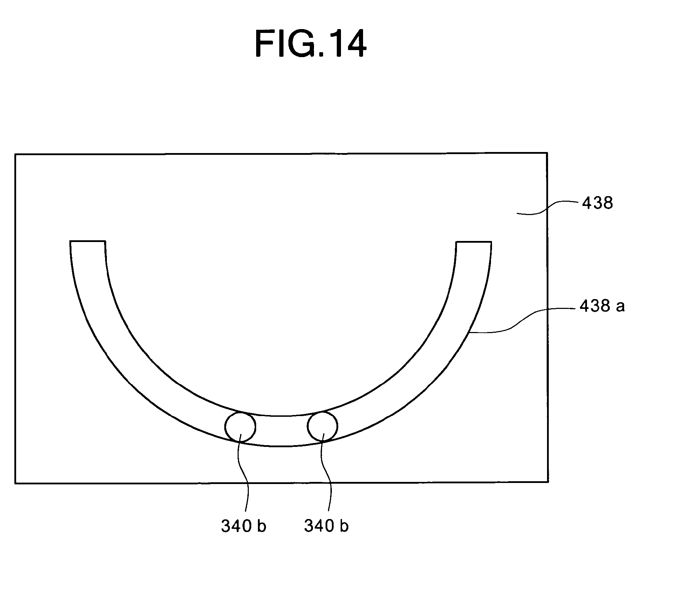

FIG. 14 schematically shows an enlarged modified portion of the third modified example of a mixing and degassing apparatus in the second preferred embodiment. In this modified example, a second shaft supporting portion 438 is provided in place of the second shaft supporting portion 338. Other constructions are the same as those in the above-described preferred embodiment, so that repeated descriptions thereof are omitted.

In this modified example, there is formed a through hole 438a which passes through the second shaft supporting portion 438 having a substantially rectangular planar shape and which extends so as to have a circular-arc shape. The width of the through hole 438a is greater than the diameter of each of the supporting shaft portions 340b, 340b of the first and second shearing stress applying member 340, 340. The supporting shaft portions 340b, 340b (and bearings which rotatably support thereon the supporting shaft portions 340b, 340b) pass through the through hole 438a and are movable along the through hole 438a, so that it is possible to change the positions of the supporting shaft portions 340b, 340b of the first and second shearing stress applying members 340, 340. Furthermore, the second shaft supporting portion 438 may be provided with fixing members for fixing the supporting shaft portions 340b and 340b at desired positions.

In this modified example, since the first and second shearing stress applying members 340, 340 can be arranged at desired positions in the container 320, the positions of the shearing stress applying portions 340a, 340a can be changed in accordance with the size and shape of the container 320 and/or the physical properties of the material to be treated, so that it is possible to precisely mix the material.

Furthermore, if the second shaft supporting portion 438 is not provided with the fixing members for fixing the supporting shaft portions 340b and 340b at desired positions, the first and second shearing stress applying members 340 and 340 are arranged in the vicinity of the maximum centrifugal force applying region 72 of the container 320 by centrifugal force, so that it is possible to apply a great shearing stress to a material to be treated. In addition, it is possible to change the positions of the first and second shearing stress applying members 340 and 340 in accordance with the progress of mixing of the material. That is, the distance between the first and second shearing stress applying members 340 and 340 can be larger in such a state that the grain size of the material is larger, and the distance between the first and second shearing stress applying members 340 and 340 can be smaller as the grain size of the material is smaller. Therefore, it is possible to mix and degas the material without applying excessive stress to the material.

The mixing and degassing apparatus in the above-described preferred embodiment may be designed to rotate only one of the shearing stress applying portions 340a and 340a on its own axis. Also in this case, it is possible to apply a great shearing stress to the material between the shearing stress applying portions 340a and 340a, so that it is possible to precisely mix the material.

In the mixing and degassing apparatus in the above-described preferred embodiment, it may be designed that the first and second shearing stress applying members 340 and 340 can move (oscillate or vibrate) in longitudinal directions (in directions along the rotation axis Y2). For example, the apparatus may be provided with a torque applying mechanism for applying torque for moving the first and second shearing stress applying members 340 and 340 in longitudinal directions while mixing and degassing the material. The torque applying mechanism may apply torque to the first and second shearing stress applying members 340 and 340 so as to change the relative position of the shearing stress applying portions 340a and 340a. Alternatively, only one of the first and second shearing stress applying members 340 and 340 may be moved in longitudinal directions. Thus, it is possible to precisely mix and degas the material.

### [Third Preferred Embodiment]

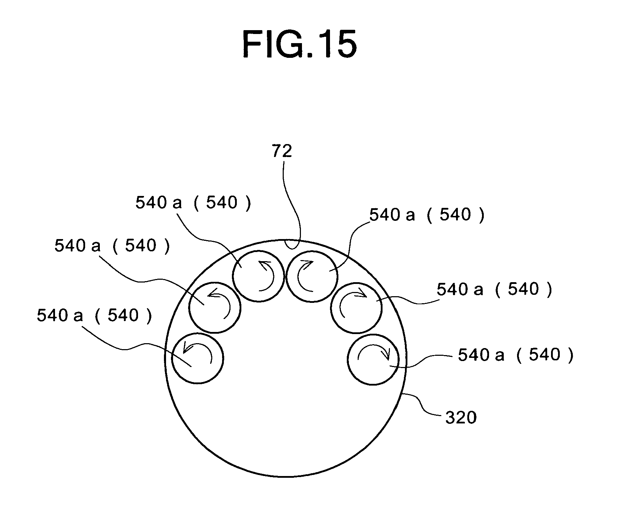

FIG. 15 schematically shows part of the third preferred embodiment of a mixing and degassing apparatus according to the present invention. In this preferred embodiment, a plurality of shearing stress applying members 540, each of which has a shearing stress applying portion 540a, are provided in place of the pair of shearing stress applying member (the first and second shearing stress applying members) 340 and 340. Other constructions are substantially the same as those in the above-described second preferred embodiment, so that repeated descriptions thereof are omitted.

The plurality of shearing stress applying portions 540a are arranged on a circumference which is concentric with the inner wall surface of the container 320. In addition, the apparatus is provided with a rotating mechanism (not shown) for rotating the plurality of shearing stress applying members 540. As shown in FIG. 15, the shearing stress applying portions 540a are designed to rotate in such directions that the traveling directions of the facing surfaces of a pair of shearing stress applying portions 540a, which are arranged in the vicinity of the maximum centrifugal force applying region 72, are coincident with the direction of centrifugal force. Thus, it is possible to apply a shearing stress to a material to be treated in the container 320, and it is possible to greatly fluidize the material, so that it is possible to precisely mix the material.

While the present invention has been disclosed in terms of the preferred embodiment in order to facilitate better understanding thereof, it should be appreciated that the invention can be embodied in various ways without departing from the principle of the invention. Therefore, the invention should be understood to include all possible embodiments and modification to the shown embodiments which can be embodied without departing from the principle of the invention as set forth in the appended claims.

## Claims

1. A mixing and degassing apparatus comprising:
a supporting member;
a rotating base which is supported on the supporting member so as to be rotatable on a first rotation axis;
a first rotating mechanism for rotating the rotating base on the first rotation axis;
a container which is fixed to a peripheral portion of the rotating base and which is rotatable with the rotating base around the first rotation axis; and
a shearing stress applying means for applying a shearing stress to a material to be treated in the container,
wherein the material is mixed and degassed by applying the shearing stress to the material in the container by the shearing stress applying means while rotating the rotating base on the first rotation axis by the first rotating mechanism.

2. A mixing and degassing apparatus as set forth in claim 1, wherein said shearing stress applying means comprises:
a shearing stress applying member having a shearing stress applying portion for contacting said material in said container to apply the shearing stress to said material; and
a driving mechanism for driving the shearing stress applying member.

3. A mixing and degassing apparatus as set forth in claim 2, wherein said shearing stress applying portion of said shearing stress applying member is rotatable on a second rotation axis, which is different from said first rotation axis, in said container,
said driving mechanism for driving said shearing stress applying member is a second rotating mechanism for rotating said shearing stress applying portion of said shearing stress applying member on the second rotation axis, and
said shearing stress applying portion of said shearing stress applying member rotates on the second rotation axis and moves along a trajectory of rotation of said container, while said container rotates around said first rotation axis.

4. A mixing and degassing apparatus as set forth in claim 3, wherein said shearing stress applying portion of said shearing stress applying member rotates on said second rotation axis if said rotating base rotates on said first rotation axis.

5. A mixing and degassing apparatus as set forth in any one of claims 2 through 4, wherein said shearing stress applying portion of said shearing stress applying member is arranged in the vicinity of an inner wall of said container.

6. A mixing and degassing apparatus as set forth in anyone of claims 2 through 4, wherein said shearing stress applying portion of said shearing stress applying member is arranged in the vicinity of a region which is arranged on an inner wall of said container and which is farthest from said first rotation axis.

7. A mixing and degassing apparatus as set forth in claim 1, wherein said shearing stress applying means has a plurality of shearing stress applying members, each of which has a shearing stress applying portion for contacting said material in said container to apply a shearing stress to said material.

8. A mixing and degassing apparatus as set forth in claim 7, wherein said shearing stress applying portion of each of said plurality of shearing stress applying members is rotatable on a second rotation axis, which is different from said first rotation axis, in said container, and
said shearing stress applying portion of each of said plurality of shearing stress applying members rotates on the second rotation axis and moves along a trajectory of rotation of said container, while said container rotates around said first rotation axis.

9. A mixing and degassing apparatus as set forth in claim 7 or 8, wherein said shearing stress applying portion of each of said plurality of shearing stress applying members is arranged in the vicinity of an inner wall of said container.

10. A mixing and degassing apparatus as set forth in claim 7 or 8, wherein said shearing stress applying portions of a pair of shearing stress applying members of said plurality of shearing stress applying members are arranged in the vicinity of a region which is arranged on an inner wall of said container and which is farthest from said first rotation axis.
